# EUROPEAN PATENT SPECIFICATION

(11) **EP 3 921 973 B1**
(45) Date of publication and mention of the grant of the patent: **30.08.2023**
(21) Application number: 19704316.9
(22) Date of filing: 08.02.2019
(51) Int. Cl.: H04L 9/32

(54) **TELEMATICS UNIT**
TELEMATIKEINHEIT
UNITÉ TÉLÉMATIQUE

(43) Date of publication of application: 15.12.2021
(73) Proprietor: Uze! Mobility GmbH, 28215 Bremen (DE)
(72) Inventor: KAHMEN, Jan, 20459 Hamburg (DE); STUMPF, Moritz, 22081 Hamburg (DE); THELEN, Sebastian, 58640 Iserlohn (DE); JABLOVSKI, Alexander N., 28213 Bremen (DE)
(74) Representative: Cohausz & Florack
(86) International application number: PCT/EP2019/053176
(87) International publication number: WO 2020/160789

(56) References cited:
- CN-A- 108 597 128
- US-A1- 2018 091 596
- Akash Madhusudan: "Applying Smart Contracts to Secure Car Sharing Systems", , 1 January 2018 (2018-01-01), XP55622663, Retrieved from the Internet: URL:https://www.esat.kuleuven.be/cosic/pub lications/thesis-313.pdf [retrieved on 2019-09-16]
- DORRI ALI ET AL: "BlockChain: A Distributed Solution to Automotive Security and Privacy", IEEE COMMUNICATIONS MAGAZINE, IEEE SERVICE CENTER, PISCATAWAY, US, vol. 55, no. 12, 1 December 2017 (2017-12-01), pages 119-125, XP011674437, ISSN: 0163-6804, DOI: 10.1109/MCOM.2017.1700879 [retrieved on 2017-12-13]
- Akash Madhusudan: "Akash Madhusudan | COSIC", , 16 September 2019 (2019-09-16), XP55622664, Retrieved from the Internet: URL:https://www.esat.kuleuven.be/cosic/peo ple/akash-madhusudan/ [retrieved on 2019-09-16]

## Description

### FIELD

The following disclosure relates to the field of telematics units, or more particularly relates to systems, apparatuses, and methods for enhancing the security of performing or triggering performing one or more actions by a respective telematics unit, and additionally providing a trusted performing or triggering performing of the one or more actions by the respective telematics unit, e.g. a respective telematics unit that is comprised by a vehicle (e.g. car sharing vehicles).

### BACKGROUND

For the meaningful integration of a blockchain technology in the mobility industry there are several possible application fields. On the one hand, the creation of a network of non-central and vehicles with a uniform access rights structure and providing censorship resistance in a single trusted system is challenging. On the other hand, there is a management required for a maintenance and movement of tasks in conjunction with one or more vehicles of a car sharing fleet.

It is known that a registration process can be displayed in an application (e.g. app) of a respective mobile device. Then, e.g. a PIC code is used by the user to get access to the desired car. The user must enter the PIN code in the car and then enter it e.g. in the app. If the PIN code is valid the car can be opened and be used. Further, such information sent between e.g. the mobile device and a server checking the PIN code are based on an identifier of the user that is often times not encrypted in the information transferred. Further, a fixed key to secure information may be used, wherein this may also be subject to fraudulent usage. Chinese Patent Application publication document CN 108597128 discloses an urban networked car sharing system making use of blockchain technology for the authentication and verification of vehicle telematics data.

A. Madhusudan: "Applying Smart Contracts to Secure Car Sharing Systems"; United States Patent Application publication document US 2018/091596 A1; and A. Dorri et al: "BlockChain: A Distributed Solution to Automotive Security and Privacy", disclose background information on the use of blockchain technology for the authentication of vehicle telematics data.

### SUMMARY OF SOME EXEMPLARY EMBODIMENTS

The usage of a fixed key, and/or a PIN code, and further of plain text information that are transferred to enable usage of a vehicle (e.g. car sharing vehicle) is of a high risk to fraudulent usage.

It is thus, inter alia, an object of the invention to enhance the security of performing or triggering performing of one or more actions by a telematics unit, e.g. a telematics unit that is comprised by a vehicle (e.g. of a car sharing fleet).

According to a first exemplary aspect of the present invention, a method is disclosed, the method comprising:
- obtaining a transaction information indicative of a transaction to be performed or triggered to be performed, wherein the transaction information is signed by at least one mobile device and/or an application of the at least one mobile device;
- checking whether or not the transaction information was verified by at least one server at least partially based on a blockchain, wherein the at least one server is enabled to verify the transaction by determining a hash value that is to be comprised by the blockchain in case the transaction is correctly signed and the at least one mobile device and/or the application of the mobile device is allowed to perform or trigger performing of the transaction, wherein the blockchain is accessible by the at least one server and at least one mobile device; and
in case the checking is successful:
- performing or triggering performing of the transaction.

This method may for instance be performed and/or controlled by an apparatus, for instance a telematics unit. For instance, the method may be performed and/or controlled by using at least one processor of the telematics unit. For instance, such a telematics unit may for instance be comprised by a vehicle, e.g. car, truck, bike, motorbike, delivery vehicle, or the like, to name but a few non-limiting examples. For instance, such a telematics unit may for instance be comprised by a vehicle of a car sharing fleet.

According to a further exemplary aspect of the invention, a computer program is disclosed, the computer program when executed by a processor causing an apparatus, for instance a server, to perform and/or control the actions of the method according to the first exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the method according to the first exemplary aspect of the present invention.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the first exemplary aspect.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a second exemplary aspect of the present invention, a method is disclosed, the method comprising:
- generating a transaction information indicative of a transaction to be performed or triggered to be performed, wherein the transaction information is signed by the at least one mobile device and/or an application of the at least one mobile device;
- providing the transaction information to be verified by at least one server;
- checking whether or not the transaction information was verified by the at least one server at least partially based on a blockchain, wherein the at least one server is enabled to verify the transaction by determining a hash value that is to be comprised by the blockchain in case the transaction is correctly signed and the at least one mobile device and/or the application of the mobile device is allowed to perform or trigger performing of the transaction, wherein the blockchain is accessible by the at least one server and at least one telematics unit; and
in case the checking is successful:
- outputting a feedback information indicative of the result of the checking.

This method may for instance be performed and/or controlled by an apparatus, for instance a mobile device, such as a smartphone, tablet, wearable, IoT (Internet-of-Things) device, to name but a few non-limiting examples. For instance, the method may be performed and/or controlled by using at least one processor of the mobile device.

According to a further exemplary aspect of the invention, a computer program is disclosed, the computer program when executed by a processor causing an apparatus, for instance a server, to perform and/or control the actions of the method according to the second exemplary aspect of the present invention.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the method according to the second exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the second exemplary aspect.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a third exemplary aspect of the present invention, a method is disclosed, the method comprising:
- obtaining a transaction information indicative of a transaction to be performed or triggered to be performed, wherein the transaction information is signed by at least one mobile device and/or an application of the at least one mobile device;
- determining a verifying information at least partially based on the transaction information, wherein it is checked whether or not the transaction is correctly signed and the at least one mobile device and/or the application of the mobile device is allowed to perform or trigger performing of the transaction, wherein in case the checking is successful:
   - determining a hash value indicative of the transaction being correctly signed and verified at least partially based on the transaction information and the verifying information; and
   - comprising the determined hash value in a blockchain that is accessible by at least one mobile device and at least one telematics unit.

This method may for instance be performed and/or controlled by an apparatus, for instance a server. Alternatively, this method may be performed and/or controlled by more than one apparatus, for instance a server cloud comprising at least two servers. For instance, the method may be performed and/or controlled by using at least one processor of the server or server cloud.

According to a further exemplary aspect of the invention, a computer program is disclosed, the computer program when executed by a processor causing an apparatus, for instance a server, to perform and/or control the actions of the method according to the third exemplary aspect of the present invention.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the method according to the third exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the third exemplary aspect.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a fourth exemplary aspect of the invention, a system is disclosed, the system comprising:
- at least one telematics unit comprising respective means configured to perform and/or control the method according to the first exemplary aspect of the present invention;
- at least one mobile device comprising respective means configured to perform and/or control the method according to the second exemplary aspect of the present invention; and
- at least one server comprising respective means configured to perform and/or control the method according to the third exemplary aspect of the present invention.

In the following, exemplary features and exemplary embodiments of all aspects of the present invention will be described in further detail.

The blockchain, as used herein, comprises respectively consists of a consensus-building methodology. The blockchain may for instance be stored in a memory, e.g. a database. A client (e.g. a respective mobile device performing and/or controlling the method according to the second exemplary aspect of the present invention, and/or a respective telematics unit performing and/or controlling the method according to the first exemplary aspect of the present invention) and a respective server may for instance have access to the blockchain. A respective server may for instance represent a full node and/or enable a so-called consensus model, which may for instance depend on the respective server (e.g. full node) that comprises or is connectable to the blockchain respectively database comprising the blockchain. The at least one server, as used herein, may for instance be represented by a plurality of servers (e.g. at least two servers) representing a network. Such a network may for instance be a decentralized network. The at least one server, as used herein, may for instance be represented by a consortium of a plurality of servers (e.g. at least two servers), wherein the respective servers of the consortium are respectively associated with each other. The at least one server may for instance be a (e.g. full) node of the network and/or of the consortium. The network and/or the consortium may for instance provided one or more operations, e.g. determining verifying information of a transaction information, at least partly jointly, e.g. determining a respective verifying information by each of the servers of the network and/or the consortium, and/or verifiying each others results, to name but a few non-limiting examples.

The at least one telematics unit may for instance comprise a processor and memory. The at least one telematics unit may for instance comprise a GNSS (Global Navigation Satellite System)-sensor (e.g. a GPS (Global Positioning System)-sensor), e.g. to determine its current location. The at least one telematics unit may for instance comprise a communication interface to be enabled to communicate with one or more other entities, e.g. entities comprised by a respective system according to the fourth exemplary aspect of the present invention.

According to an exemplary embodiment of all exemplary aspects of the present invention, the at least one telematics unit is comprised by a vehicle.

The at least one telematics unit may for instance comprise one or more actors to control one or more elements of a vehicle that comprises the at least one telematics unit. The at least one telematics unit may for instance be a module that is installable in a vehicle, e.g. in particular installable subsequent to the manufacturing of the vehicle.

The transaction information may for instance be obtained, e.g. by receiving the transaction information. The transaction information may for instance be obtained (e.g. received) from at least one mobile device performing and/or controlling the method according to the second exemplary aspect of the present invention. The transaction information may for instance be obtained by a push-method, or via a broadcast method. The transaction information may for instance be transmitted via a communication network, e.g. the Internet. The transaction information may for instance be obtained by a REST (Representational State Transfer) API (Application Programming Interface). The transaction information may for instance be obtained by a pull-method. It will be understood that within the meaning of the present invention, information transmitted between the entities performing and/or controlling the respective methods according to all exemplary aspects of the present invention may for instance transmit information in at least one of the described ways.

The transaction information may for instance comprise or represent an identifier of the at least one telematics unit. The identifier may for instance enable the at least one telematics unit to determine whether or not the received transaction information is addressed at the respective at least one telematics unit. In case the transaction information was obtained via a broadcast, the at least one telematics unit may for instance be enabled to determine whether or not a transaction as comprised or represented by the respective transaction information is addresses at the respective at least one telematics unit.

The transaction information is checked, e.g. by checking whether or not the transaction information was verified by at least one server. This may for instance be performed in the blockchain (e.g. by accessing a database provided by the at least one server performing and/or controlling the method according to the third exemplary aspect of the present invention). The at least one server may for instance be also referred to as full node that is e.g. of at least a part of a validator network comprised by an architecture enabling the present invention (e.g. the system according to the fourth exemplary aspect of the present invention). In case the transaction information was verified, a respective block that the transaction of the transaction information was determined to be allowable by the at least one server is incorporated into the blockchain, so that the blockchain comprises the respective block. Of course, a plurality of such validations (e.g. at least two, or at at least three of such validations) may for instance be comprised by the blockchain e.g. by a plurality of blocks, wherein the more blocks being indicative of a respective transaction being verified, the more the respective transaction to be performed can be trusted. In case that at least three of such validations are represented by the blockchain, thus, the respective transaction information was verified e.g. by at least three different servers that respectively represent the consensus model, the verified transaction information can be trusted due to the transaction information was verified by at least three different servers (e.g. full nodes) of a network/consortium, as described above. The checking may for instance comprise a requirement that e.g. the transaction of the transaction information may for instance be required to be validated e.g. a pre-defined number of times, e.g. at least two or more times, to name but one non-limiting example.

The signature of the respective transaction information (e.g. the transaction information is signed after the transaction information is generated by the at least one mobile device performing and/or controlling the method according to the second exemplary aspect of the present invention) may for instance be performed based on a public/private key method/procedure.

Whether or not the at least one mobile device and/or the application of the mobile device that generated and signed the transaction information is allowed to perform or trigger performing of the transaction may for instance be checked based on a smart contract database. Such a smart contract database may for instance comprise or represent certain parameters being indicative of one or more transaction that are allowable to the user so that the user may for instance be provided with the transaction, e.g. as a service. For instance, such a smart contract may for instance be indicative of e.g. accessing or delegating an access to the telematics unit of a vehicle so that a certain entity (e.g. the at least one mobile device) may for instance be enabled to access the telematics unit, or to be provided with one or more information that are stored in a memory of the at least one telematics unit by the respective at least one telematics unit. Further, such a smart contract may for instance be indicative of whether or not one or more information stored in a memory of the at least one telematics unit are allowed to be received from a third party, e.g. an insurance company, or advertising company, to name but a few non-limiting examples. A smart contract, as used herein, may for instance comprise or be represented by one or more conditional statements, such as a If-, Then-, Else conditional statement. For instance, a respective transaction information may for instance request the doors of a vehicle to be unlocked. Then, the checking based on the smart contract database may for instance check a conditional statement of a respective smart contract of whether or not the user that generated the respective transaction information is allowed to perform the requested opening of the doors of the vehicle, to name but one non-limiting example.

Further, the blockchain may for instance be accessible by the at least one server and at least one mobile device besides the at least one telematics unit. It will be understood that the blockchain is accessible by the at least one telematics unit as well, see step of the checking at least partially based on the blockchain. Whether or not the transaction is allowable may for instance be represented by a block being indicative of a hash value of the blockchain. The hash value may for instance be verifiable by the at least one telematics unit so that the at least one telematics unit can perform the checking.

In case the checking is successful, the transaction is performed or triggered to be performed by the at least one telematics unit. For instance, the at least one telematics unit may for instance comprise or be connectable to one or more actors enabling the at least one telematics unit to control e.g. one or more elements of a vehicle in which the at least one telematics unit may for instance be installed.

Such a smart contract, as used herein, may for instance be considered to be a part of the blockchain. At least partially based on such a smart contract comprised by the blockchain, one or more transactions may for instance be performed and/or controlled automatically. Further, one or more pieces of information that are comprised or represented by the blockchain may for instance be drawn out of the blockchain without one or more human interventions (being possible) in the blockchain. Such a smart contract may for instance be indicative of one or more conditions and/or parameters that were agreed by the entities of a respective system, e.g. the system according to the fourth exemplary aspect of the present invention. A respective smart contract may for instance be executed by an if-then function, e.g. depending on the respective agreed consensus. In case the one or more conditions and/or parameters occur in the respective system, e.g. the respective transaction may for instance be executed automatically. For instance, such a smart contract may for instance be performed and/or controlled by at least one entity of the entities that are comprised by the system according to the fourth exemplary aspect of the present invention. E.g., each entity of these entities may for instance perform a checking of a respective smart contract in a deterministic way, and may then store the result e.g. as a part of the respective transaction information (e.g. incorporated into the respective transaction information), and further, store it as a block in the blockchain.

According to an exemplary embodiment of the first exemplary aspect of the present invention, the method further comprises:
- obtaining a state information indicative of a state at least one element controllable by the at least one telematics unit is set to; and
wherein the transaction is performed or triggered to be performed by setting the at least one element controllable by the at least one telematics unit into the state of the state information.

A state information may for instance be indicative of a certain state a respective element that is comprised by a vehicle also comprising the at least one telematics unit may for instance be set into. For instance, a respective state information may be indicative of an open state of all (or some of the) doors of a vehicle. By obtaining (e.g. receiving) the respective state information, the at least one telematics unit may for instance set the doors in an open state by e.g. using one of its actors to send a respective control command to the vehicle. Thus, e.g. a respective vehicle (e.g. a car) can be opened/closed via the blockchain.

Furthermore, a respective state information may for instance enable a right for such an opening/closing of the respective vehicle to be assigned to individual blockchain participants, e.g. to a respective user of a respective at least one mobile device. For instance, in this case, a respective state information that is obtained by the at least one telematics unit may for instance be stored, and in case a respective transaction is triggered, it may for instance only be executed in case the respective transaction information being indicative of the opening/closing of the respective vehicle is signed by the individual participant.

One or more states in which a respective element of a respective vehicle may be set into may for instance be a displaying of an advertisement on one or more displaying means comprised by the vehicle, outputting one or more parameters (e.g. routes, time, dates at which the respective vehicle was used or at which the respective vehicle was located), or the like, to name but a few non-limiting examples.

In this way, a respective obtaining of a state information of a plurality of such telematics unit may enable e.g. a vehicle fleet/pool to be accessed and/or managed - e.g. via a booking platform - at least partially based on the blockchain.

According to an exemplary embodiment of the third exemplary aspect of the present invention, the method further comprises:
- providing (e.g. sending, e.g. via push-method) a state information indicative of a state at least one element controllable by the at least one telematics unit is set to.

According to an exemplary embodiment of all exemplary aspects of the present invention, the transaction is indicative of an action to be performed and/or triggered to be performed by the at least one telematics unit, in particular an opening or closing action to get access to a vehicle comprising the at least one telematics unit.

Additionally or alternatively to the state information, the transaction information (e.g. itself) may for instance be utilized to control one or more elements comprised by a vehicle. In particular, then, a respective transaction information may for instance be provided (e.g. via a push-method) from at least one server performing and/or controlling the method according to the third exemplary aspect of the present invention to the at least one telematics unit, e.g. directly after a generated transaction information was obtained by the at least one server from a respective mobile device performing and/or controlling the method according to the second exemplary aspect of the present invention and being verified respectively validated by the at least one server.

According to an exemplary embodiment of the first exemplary aspect of the present invention, the method further comprises:
- obtaining a location information indicative of a position at which the transaction is allowed to be performed;
- checking a current location with the location information, wherein the transaction is performed or triggered to be performed only in case the current location relatively matches a location that is comprised or represented by the location information.

The location information may for instance be obtained, e.g. by receiving the location information. For instance, the location information may for instance be obtained together with the transaction information, e.g. by being comprised by the transaction information. For instance, in case the transaction may for instance perform or trigger performing the at least one telematics unit to display a certain information (e.g. advertisement information) at one or more displaying means (e.g. displays) comprised by the vehicle, the certain information may for instance only be displayed at a certain area or position. This area or position may for instance be represented by the location information. For instance, the location information may be in the form of coordinates (e.g. x-, and y-coordinates, or latitude-, longitude-coordinates, and/or a radius of a certain length (e.g. in the unit of meters), to name but a few non-limiting examples).

The current location may for instance be determined, e.g. by a GNSS-sensor (e.g. GPS-sensor) comprised by the at least one telematics unit. Then, the current location may for instance be compared to the certain area or position as comprised or represented by the location information. For instance, only in case the current location relatively matches the certain area or position of the location information, the transaction may be performed or triggered to be performed.

For real-time monitoring and storing of displayed information (e.g. advertisement information), e.g. a transaction may for instance be used. For instance, such a transaction enabling or requesting one or more information to be displayed on one or more displaying means comprised by the respective vehicle, the transaction information may comprise one or more of the following data:
- timestamp;
- location information (e.g. coordinates);
- advertising ID;
- people that have viewed the information (e.g. advertisement) (e.g. counting by passive WLAN or Bluetooth sniffing); and
- ID of the at least one telematics unit.

For instance, all of the aforementioned data may be comprised by a respective transaction information enabling such a displaying of information.

In this way, a further dimension of security by such a location comparison may for instance be enabled by the present invention, e.g. by enabling unchangeable evidence that certain information (e.g. advertisement) has been displayed according to the requested transaction.

According to an exemplary embodiment of all exemplary aspects of the present invention, the transaction is performed or triggered to be performed only in case at least one server, at least one mobile device, and the at least one telematics unit have verified the transaction information.

According to an exemplary embodiment of all exemplary aspects of the present invention, the transaction is performed or triggered to be performed only in case a timeslot assigned for the transaction to be performed or triggered to be performed is valid.

The timeslot may for instance represent a timespan in which the transaction of the transaction information is allowed to be performed. Such a timeslot may for instance be comprised or represented by the transaction information. In case such a timeslot is comprised or represented by the transaction information, it may for instance be compared to the current time, prior to performing or triggering performing of the transaction. Only in case the timeslot applies, the transaction may for instance be performed or triggered to be performed.

For instance, the timeslot may represent a timespan of e.g. 1 minute, 30, 20, 10, 5 seconds, or less, after the generating of the transaction information by a respective at least one mobile device. Then, e.g. this timespan applies to e.g. open/close a vehicle - thus, performing and/or controlling the transaction of a respective transaction information - comprising the at least one telematics unit. After the timespan of the assigned timeslot has elapsed, the respective transaction information is void. In this way, e.g. security can be even more enhanced by utilizing such a timeslot assigned to a respective transaction information.

According to an exemplary embodiment of all exemplary aspects of the present invention, the transaction information is further indicative of an identifier of the at least one telematics unit, wherein the identifier is stored in a secure element comprised by the at least one telematics unit.

The identifier of the at least one telematics unit may for instance be stored in a secure element (e.g. a Software Guard Extension). Such a secure element may for instance be comprised by or be connectable to the at least one telematics unit. Such a secure element may for instance be hardware unit comprising a storage to which only the telematics unit itself has access to. The identifier may for instance enable a respective telematics unit (e.g. of a plurality of telematics unit of a system according to the fourth exemplary aspect of the present invention) to be identified.

According to an exemplary embodiment of all exemplary aspects of the present invention, the information are transferred in an encrypted form (e.g. by using public/private key encryption respectively decryption). Additionally or alternatively, the information may for instance be stored in the blockchain in an unencrypted fashion.

Each entity (e.g. the at least one telematics unit, the at least one mobile device, the at least one server) of the system according to the fourth exemplary aspect of the present invention may for instance be responsible for its private key, so that no unauthorized third party transaction(s) with its respective identity may be performed and/or controlled.

Due to the cryptographic security of such keys and the verifying information determined for each and every transaction which is checkable by each entity (e.g. telematics unit, mobile device, system) of the respective system, a decentralized consensus providing confidence in the correctness of the data (e.g. blocks, hash values) of the blockchain can be achieved.

A respective key that is used e.g. for the signing of a transaction, or for the encryption respectively decryption of one or more pieces of information (e.g. transaction information) transferred between entities of the system according to the fourth exemplary aspect of the present invention is valid e.g. all of the time. For instance, in case a key gets lost, a new key may for instance be assigned. Each of such assigned key may for instance be used a pre-defined number of times during a pre-defined time interval. For instance, a key to sign a generated transaction information by at least one mobile device may for instance only be used three times per minute, to name but one non-limiting example. In this way, it may for instance be avoided to flood the system with a high amount of transactions to be performed.

All keys (e.g. public and/or private key) that are required for a respective signing of one or more transactions or blocks by the respective entities of a system according to the fourth exemplary aspect of the present invention may only be used by the legitimate entity (e.g. telematics unit, mobile device, server), because otherwise inconsistencies in the architecture as represented by such a system is violated.

According to an exemplary embodiment of all exemplary aspects of the present invention, the information are transferred by a push-method.

All of the information, in particular the transaction information and/or the state information may for instance be provided to be utilized by the entities having access to the blockchain. The respective pieces of information may for instance be provided, e.g. by outputting (e.g. sending) the respective pieces of information via a push-method and/or by outputting the respective pieces of information via an API (Application Programming Interface; e.g. REST (Representational State Transfer) API) to a respective other entity of the system according to the fourth exemplary aspect of the present invention.

A respective transaction information may for instance be generated by an application executed by the at least one mobile device performing and/or controlling the method according to the second exemplary aspect of the present invention.

The transaction information may for instance be provided, e.g. to the at least one server performing and/or controlling the method according to the third exemplary aspect of the present invention to be verified by at least one server. The at least one server is different from the at least one mobile device so that involvement of another entity is guaranteed in order to verify/validate a transaction that is/was generated previously.

The feedback information is indicative of the result of the checking and may for instance be output, e.g. by obtaining (e.g. receiving, e.g. via a push-method) a respective state information indicative of the result from the at least one server that has determined a verifying information based on the generated transaction information.

The at least one mobile device configured to perform and/or control the method according to the second exemplary aspect of the present invention may for instance be portable (e.g. weigh less than 5, 4, 3, 2, or 1 kg). The at least one mobile device may for instance comprise or be connectable to a display for displaying information, e.g. a route that is guided/navigated to a user, to name but one non-limiting example. The at least one mobile device may for instance comprise or be connectable to means for outputting sound, e.g. in the form of spoken commands or information. The at least one mobile device may for instance comprise or be connectable to one or more sensors for determining the devices position, such as for instance a GNSS receiver, in the form of a GPS receiver. The at least one mobile device may for instance comprise or be connectable to one or more sensors, e.g. in the form of an accelerometer and/or a gyroscope for gathering (e.g. measuring) further information. The at least one mobile device may for instance comprise or be connectable to a receiver and/or a transmitter (e.g. a transceiver) for receiving and/or sending information. For instance, the at least one mobile device may comprise one or more radio receivers (e.g. radio transceivers, e.g. cellular radio transceivers).

If a user of the at least one mobile device may for instance request to participate in a service provided by a service provider (e.g. car sharing), the user may for instance provide a valid identity document, so that in return a (digital) key e.g. for signing one or more transaction information indicative of transactions to be provided by the service provider, may for instance be issued. Such a process may for instance enable a public key to be used, wherein such a key may for instance be generated previously by the at least one mobile device respectively by an application (e.g. a native app) executed by the at least one mobile device. Such an application may for instance further enable to a public key to be generated and be stored on the respective at least one mobile device of the user.

Such an initial set up may for instance be verified further by external services, for instance, third party authorities, in order to achieve egal certainty, to name but one non-limiting example.

The respective transaction information that is generated may for instance be signed. In this way, it is enabled that only a user is allowed if the user has been authenticated (e.g. passed certain security checks successfully). Further, it may be assured that the at least one mobile device used for generating and signing of the transaction information is a valid entity.

According to an exemplary embodiment of the second exemplary aspect of the present invention, the method further comprises:
- providing credential information indicative of a user of the at least one mobile device; and
- receiving an authentication information indicative of the user being authenticated or not, and the transaction being allowed or not.

Credential information indicative of a user of the at least one mobile device are provided, e.g. by sending (e.g. via a push-method) the credential information to the at least one server, or another entity (e.g. comprised by the system according to the fourth exemplary aspect of the present invention) that is configured to check the credentials of a user of the at least one mobile device respectively the application executed by the at least one mobile device. For instance, in order to be enabled to generate a transaction information, a user may for instance provide a username and password combination, to be authenticated to use a service (e.g. car sharing service) of a service provider. For instance, such credential information may for instance be input by a user in the mobile device respective an application performed by the mobile device. Then, the credential information may for instance be used to authenticate the user.

Credential information may for instance comprise log-information, such as password, username or email address. Such credential information may for instance be used to decrypt a private key. The encrypted information may for instance be received by the at least one server prior to the decryption. This described method may for instance be performed between the at least one server and one or more clients (e.g. telematics unit, mobile device, to name but a few non-limiting examples). After successful decryption, one or more transaction of one or more respective transaction information are allowed to be performed or triggered to be performed.

The entity that has checked the credential information may for instance provide (e.g. send via a push-method) as a response the result of the checking of the credential information being comprised or represented by the authentication information (back) to the at least one mobile device.

A respective transaction information generated by the at least one mobile device and provided to the at least one server, may for instance be the basis for determining the verifying information at least partially based on the transaction information. When determining the verifying information, it is checked whether or not the transaction of the transaction information is correctly signed (e.g. by utilizing public/private key encryption respectively decryption) and the at least one mobile device and/or the application of the mobile device is allowed to perform or trigger performing of the transaction (e.g. by checking a smart contract, as disclosed above).

In case the checking is successful (e.g. has a positive result), a hash value indicative of the transaction being correctly signed and verified is determined at least partially based on the transaction information and the verifying information. Then, a respective block representing the hash value may for instance be generated to be included or be added into the blockchain. Such a step is referred to as comprising the determined hash value in the blockchain, e.g. as a respective block of the blockchain.

The present invention enables to integrate further (e.g. new) services of a plurality of service providers (thus it is not limited to one or more services of only one service provider), and additionally or alternatively, one or more further vehicles (e.g. cars, trucks, bikes, motorbikes, or the like) to be integrated in the system according to the fourth exemplary aspect of the present invention.,

Furthermore, integrity check on one or more e.g. different user data in the system can be performed and/or control, in particular to ensure that compressed data can be recognized.

All information may for instance be stored (e.g. one or more transaction information respectively the determined hash value) in the blockchain, e.g. by incorporating, or injecting, or adding a respective block representing the hash value in the blockchain.

Thus, e.g. all booking transactions with respect to one or more vehicles comprising a respective telematics unit according to the first exemplary aspect of the present invention of a respective car sharing fleet e.g. (bookings of vehicle to rent, opening(s) of respective vehicle(s), or further transactions on/in/with the vehicle that can be gathered and/or controlled by the at least one telematics unit comprised by such a vehicle are legally secured in the blockchain. Further, once a respective block in comprised by the blockchain, it cannot be manipulated.

According to an exemplary embodiment of the third exemplary aspect of the present invention, the blockchain is stored in a decentralized way, in particular by more than one server configured to perform and/or control said method.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of a system according to an exemplary aspect of the present invention;
- Fig. 2: a flowchart showing an example embodiment of a method according to the first exemplary aspect of the present invention;
- Fig. 3: a flowchart showing an example embodiment of a method according to the second exemplary aspect of the present invention;
- Fig. 4: a flowchart showing an example embodiment of a method according to the third exemplary aspect of the present invention;
- Fig. 5: a flowchart showing an example embodiment of a method according to all exemplary aspects of the present invention;
- Fig. 6: a schematic block diagram of an apparatus configured to perform the method according to the first exemplary aspect of the present invention;
- Fig. 7: a schematic block diagram of an apparatus configured to perform the method according to the second exemplary aspect of the present invention; and
- Fig. 8: a schematic block diagram of an apparatus configured to perform the method according to the third exemplary aspect of the present invention.

### DETAILED DESCRIPTION OF SOME EXEMPLARY EMBODIMENTS

The following description serves to deepen the understanding of the present invention and shall be understood to complement and be read together with the description as provided in the above summary section of this specification.

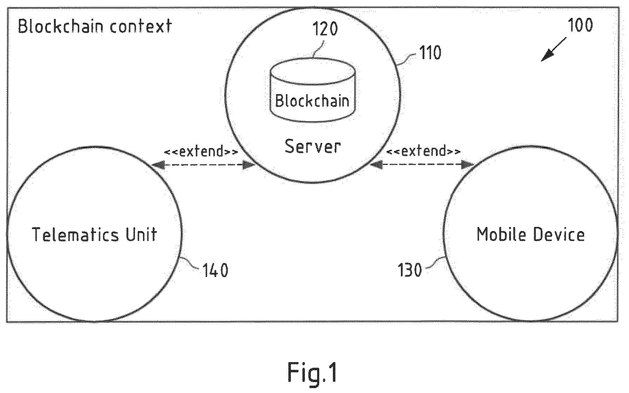

Fig. 1 is a schematic high-level block diagram of a system 100 according to the fourth exemplary aspect of the present invention. Such a system 100 may for instance represent a system architecture as used by one or more exemplary embodiments according to all aspects of the present invention.

System 100 comprises a server 110, which represents a full node of the architecture. Server 110 may for instance be operated by a service provider of a car sharing service. One or more further of such servers as server 110 representing full nodes of the architecture may for instance be operated by further third parties, and are not shown in Fig. 1.

For example, a third party, such as an insurance companies may operate another full node. Such a full node as represented by server 110 may for instance always make sure that all transactions of respective pieces of transaction information - e.g. all vehicle openings and data transmitted from or to the vehicle - are correct and valid., e.g. by determining a respective verifying information (see method according to the third exemplary aspect of the present invention). Then, a determining of a respective hash value may for instance be performed which is incorporated into a blockchain that is accessible by other entities of the architecture, e.g. mobile device 130 and one or more telematics units (e.g. telematics unit 140) that are comprised by one or more vehicles.

Every full node of the architecture may for instance get a private key, which may for instance be only valid for its service for the verification. This may for instance be used to verify the blocks of the blockchain, thus one or more hash values of transactions that are incorporated into the blockchain, and then made them available to the architecture, which may for instance be performed by a broadcast process, or a push-method to the entities (e.g. telematics unit 140, mobile device 130) of the architecture.

Not every entity respectively participant in the architecture may be a full node. System 100 may for instance comprise one or more telematics units, e.g. telematics unit 140, that are respectively comprised by one or more vehicles. Further, system 100 comprises one or more mobile device (e.g. mobile device 130), which may for instance execute an application enabling a user to be provided with a service, e.g. a car sharing service, or other services (e.g. advertisement placement on one or more displays comprised by a respective vehicle that comprised a respective telematics unit, to name but a few non-limiting examples). Such a telematics unit 140 and/or such a mobile device 130 may for instance be considered to be a light node of the architecture.

A light Node may for instance access the blockchain (e.g. represented by an accessible database of a full node, and may for instance not determine a respective verifying information in case a "new" transaction is requested by a corresponding transaction information generated, e.g. by mobile device 130.

A respective vehicle comprising a respective telematics unit may for instance be required to be online (e.g. via a communication network, e.g. the Internet), e.g. at regular intervals. In contrast, server 110 as a full node of the architecture may for instance be required to be always online, e.g. to perform and/or control the method according to the third exemplary aspect of the present invention.

Fig. 1 illustrates the principle in which all entities (e.g. serer 110, telematics unit 140, mobile device 130) interact with each other. It is illustrated that an entity (e.g. light node that participates the block chain, such as the telematics unit 140, and/or the mobile device 130), may not be required to participate in the consensus modelling as server 110. However, a mobile device requesting a transaction may in contrast be required to have or be enabled to establish a connection to a full node (e.g. server 110) to be executable. The blockchain database may for instance have a non-performant performance and should be protected from being managed by a consortium of conflicting interests. If the blockchain would be managed by of an entity that is controlled or there is only one single point of failure is the architecture, the system would be void, as trust within the system can be no longer guaranteed. Together, the at least three entities 110, 130, and 140 build a trusting environment in the form of the architecture, in which all previous transactions (e.g. openings of a plurality of vehicle comprising respective telematics units) are unchangeable. The data comprised by the blockchain may for instance have an integrated timestamp, enabling the respective (e.g. all) transactions to be chronologically organized and be cryptographically unchangeable. Further, the blockchain may for instance be a keyword blockchain that e.g. represents a security protocol on a cryptographic verifiable and distributed database. Further, the blockchain may for instance be accessed by a further entity, so that new services and e.g. vehicles comprising respective telematics units can be integrated into the architecture.

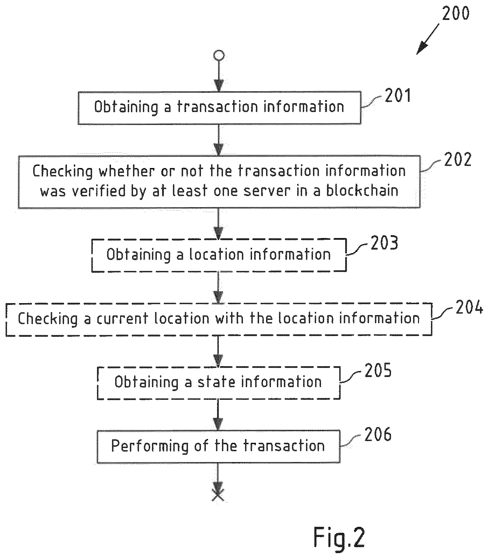

Fig. 2 is a flowchart 200 showing an example embodiment of a method according to the first exemplary aspect of the present invention. This flowchart 200 may for instance be performed by a telematics unit 140 of Fig. 1.

In a first step 201, a transaction information is obtained. The transaction information may for instance be obtained by receiving the transaction information, e.g. from a server (e.g. server 110 of Fig. 1) comprising or being connectable to a memory comprising a database. Such a database may for instance comprise or represent a blockchain. Also, the transaction information may for instance be obtained from other sources, e.g. other servers (not shown in Fig. 1), comprising or being connectable to the database respectively blockchain, to name but a few non-limiting examples. The transaction information may for instance be received directly e.g. by a push-method, or alternatively, from entities that are different from the server, and which relay the transaction information to the telematics unit.

Furthermore, a respective transaction information may for instance be generated by a telematics unit (e.g. telematics unit 140 of Fig. 1). Such a respective transaction information may for instance be generated by the respective telematics unit periodically and automatically. For instance, such a respective transaction information that can be generated by the telematics unit may for instance be indicative of one or more parameters of a vehicle that comprises the respective telematics unit (e.g. such as one or more locations and times at which the respective vehicle was located at the locations, one or more advertisement information that were displayed, one or more parameters of the usage of the vehicle, or the like, to name but a few non-limiting examples. In this way, such respective transaction information being indicative of such inf associated with a respective vehicle can be stored into the blockchain. In this way, information respectively data that is associated with the vehicle can be archived in a way that cannot be falsified (e.g. by a fraudulent third party).

In a second step 202, it is checked whether or not the transaction information was verified by at least one server (e.g. server 110 of Fig. 1) in the blockchain. For instance, the telematics unit may for instance access the blockchain or be provided (e.g. receive) at least a part of the blockchain to perform the checking. For instance, the telematics unit may for instance determine (e.g. calculate) a hash value based on the obtained transaction information (see step 201), and compare the hash value with a respective hash value that is comprised by or represented by at least a part of the blockchain. In case a match is found, the transaction information was successfully verified by the at least one server.

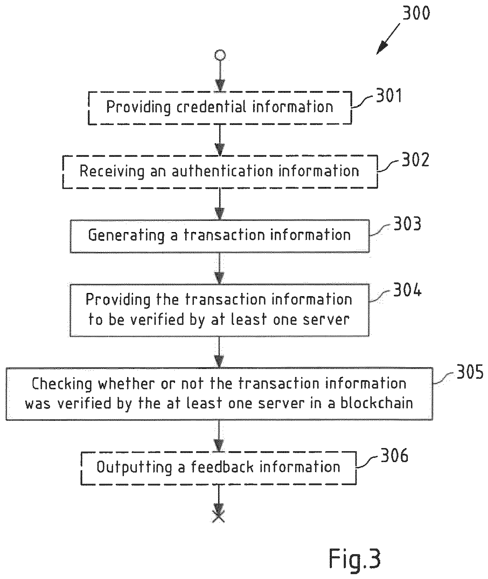

In an optional third step 203, a location information is obtained. The location information may for instance be indicative of a position of the user respectively the mobile device of the user that generated the transaction information (see step 303 of Fig. 3).

In an optional fourth step 204, the location information is checked by comparing the obtained location information to a current location of the telematics unit. The current location of the telematics unit may for instance be an area (e.g. a certain area surrounding the telematics unit, thus a vehicle that comprises the telematics unit). The current location of the telematics unit may for instance be determined based on a measurement of a GNSS-sensor, e.g. a GPS-sensor, to name but one non-limiting example. In this way, another dimension of security is enabled so that is may for instance be guaranteed that e.g. the opening of a certain vehicle comprising the respective telematics unit can only be performed in case a user of the respective mobile device that generated the transaction information obtained in step 201 is within the vicinity (e.g. a certain area around the telematics unit) of the telematics unit.

In an optional fifth step 205, a state information is obtained. Alternatively to using transaction information to perform step 206, a state information may for instance be obtained, e.g. in the same way as obtaining (e.g. receiving) the transaction information in step 201. The state information may for instance be indicative of a certain state in which at least one element of the respective vehicle that is controllable by the telematics unit comprised by this vehicle can be set into, e.g. opening of doors, reading certain telematics parameters of the vehicle, displaying a certain advertise at respective one or more advertising displays comprised by the vehicle, or the like, to name but a few non-limiting examples.

In a sixth step 206, the transaction is performed or triggered to be performed by the telematics unit, e.g. by an actor comprised by the telematics unit. The transaction may for instance be performed or triggered to be performed based on the transaction information obtained in step 201, or alternatively, based on a state information obtained in the optional step 205.

Fig. 3 is a flowchart 300 showing an example embodiment of a method according to the second exemplary aspect of the present invention. This flowchart 300 may for instance be performed by a mobile device 130 of Fig. 1.

In an optional first step 301, credential information indicative of a user of the mobile device are provided. For instance, in order to be enabled to generate a transaction information (see step 303), a user may for instance provide a username and password combination, to be authenticated to use a service (e.g. car sharing service) of a service provider. For instance, such credential information may for instance be input by a user in the mobile device respective an application performed by the mobile device. Then, the credential information may for instance be used to authenticate the user. This may for instance be performed by server 110 of Fig. 1.

In an optional second step 302, an authentication information is received. Upon successful authentication of the user based on the credential information provided in step 301, an authentication information may for instance be received. Upon reception of such an authentication information, the user may for instance be enabled to generate the transaction information in step 303, e.g. via the application of the mobile device.

In a third step 303, a transaction information is generated, e.g. by the mobile device, or alternatively by an application performed respectively executed by the mobile device. The transaction information is indicative of a transaction that may be enabled by the service provider (e.g. opening doors of a vehicle of the car sharing service provider), wherein with the transaction information, the user may for instance request this transaction to be performed. The generating of the transaction information may for instance comprise signing the transaction information, e.g. by a private key that is accessible by the mobile device, or the application executed by the mobile device.

In a fourth step 304, the transaction information is provided to be verified by at least one server (e.g. server 110 of Fig. 1). For instance, the transaction may be provided by a push-method, so that the at least one server may obtain (e.g. receive) the transaction information.

In a fifth step 305, it is checked whether or not the transaction information was verified by at least one server (e.g. server 110 of Fig. 1), wherein the checking is at least partially based on a blockchain, e.g. comprising one or more hash values of verified transactions. For instance, the mobile device, or the application executed by the mobile device may for instance access the blockchain or be provided (e.g. receive) with at least a part of the blockchain to perform the checking. For instance, the mobile device, or the application executed by the mobile device may for instance determine (e.g. calculate) a hash value based on the obtained transaction information (see step 201), and compare the hash value with a respective hash value that is comprised by or represented by at least a part of the blockchain. In case a match is found, the transaction information was successfully verified by the at least one server.

In an optional sixth step 306, a feedback information is output, e.g. in a visual manner by e.g. displaying a result of the transaction on a display of the mobile device, to name but one non-limiting example.

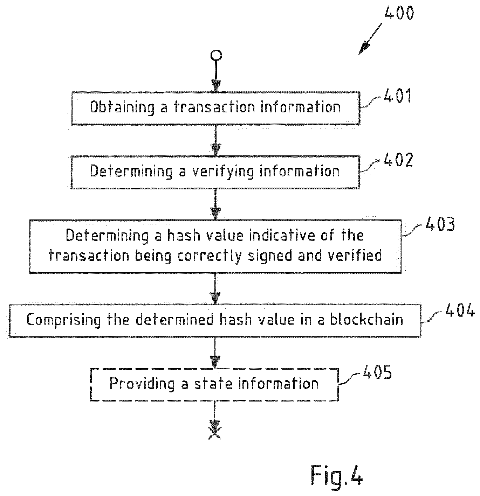

Fig. 4 is a flowchart 400 showing an example embodiment of a method according to the second exemplary aspect of the present invention. This flowchart 400 may for instance be performed by a server 110 of Fig. 1.

In a first step 401, a transaction information is obtained, e.g. by receiving it from a mobile device (e.g. mobile device 130 of Fig. 1). The transaction information may for instance be received by a push-method.

In a second step 402, a verifying information is determined. The verifying information may for instance be determined at least partially based on the transaction information of step 401, wherein it is checked whether or not the transaction of the transaction information is correctly signed and at least one mobile device (e.g. mobile device 130 of Fig. 1) and/or the application of the at least one mobile device is allowed to perform or trigger performing of the transaction. For instance, a smart contract may for instance be checked which may for instance define certain transactions (e.g. opening, closing of doors of a vehicle comprising a respective telematics unit (e.g. telematics unit 140 of Fig.1), or the like, to name but one non-limiting example).

In a third step 403, a hash value is determined, wherein the hash value is indicative of the transaction of the obtained transaction information being correctly signed and verified in step 402. The hash value is determined, e.g. based on the transaction information obtained in step 401.

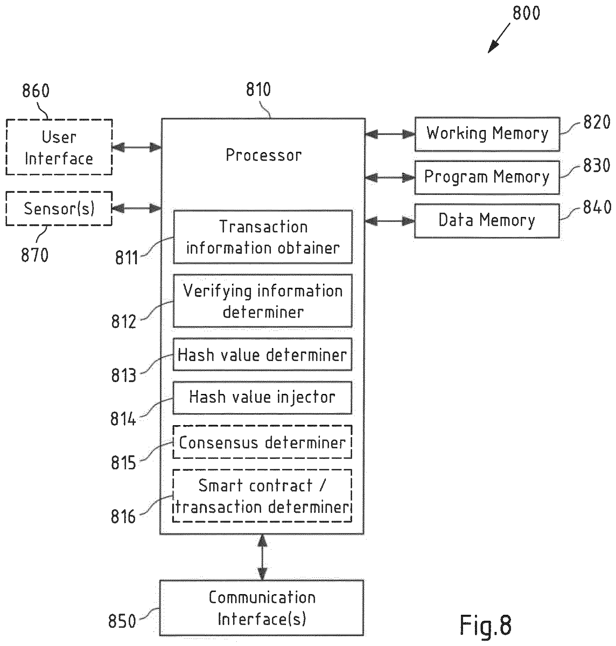

In a fourth step 404, the determined hash value is comprised (e.g. incorporated, or injected into) by a blockchain. Such a blockchain may for instance be comprised by a database that is stored in a memory. For instance, such a memory can be comprised by the server (e.g. data memory 840 of apparatus 800 of Fig. 8), or be connectable to the server.

In an optional fifth step 405, a state information is provided, e.g. to a telematics unit (e.g. telematics unit 140 of Fig. 1). Such a state information may for instance be indicative of a state into which at least one element of a vehicle that comprises the respective telematics unit may for instance be set, e.g. an open state resulting in an actor controlled by the telematics unit to unlock or generate an unlock control information so that the doors of the respective vehicle open, to name but one non-limiting example.

It will be understood that the flowchart 200 of Fig. 2, the flowchart 300 of Fig. 3, and the flowchart 400 of Fig. 4 may for instance be performed and/or controlled together. In this way, e.g. the flowcharts 200-300 of Fig. 2-4 may for instance form a system, e.g. system 100 of Fig. 1. Furthermore, by performing and/or controlling the flowcharts 200-300 of Fig. 2-4 together, an architecture enabling all of the advantages as disclosed in this specification may for instance be achievable.

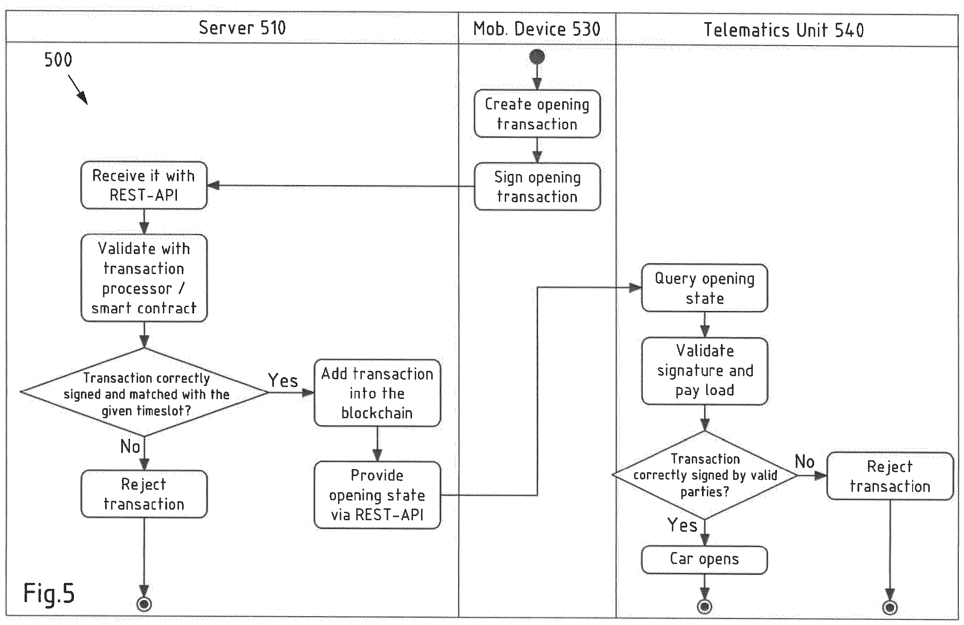

Fig. 5 is a flowchart 500 showing an example embodiment of a respective methods according to the first, second and third exemplary aspect of the present invention. This flowchart 500 may for instance be performed by the system 100 of Fig. 1.

Flowchart 500 shows an opening of a vehicle that is part of a car sharing fleet provided e.g. by a service provider as a service to be used. At first, a transaction information is generated, wherein the transaction represents that a certain vehicle comprising the telematics unit 540 is requested to be opened. The transaction information is generated by a mobile device 530, or a respective application that is executed by the mobile device 530. After the transaction information is generated, the transaction information is signed by the mobile device 530, or a respective application that is executed by the mobile device 530.

For instance, after signing of the transaction information, it is provided to server 510, e.g. by a push method, so that the respective transaction information is received by a REST-API by the server 510. Then, the received transaction information is validated with a smart contract, wherein such a smart contract may for instance be indicative of whether or not the requester (e.g. user of the mobile device 530) is allowed to perform the transaction as requested by the transaction information. A corresponding verifying information is determined.

In case the transaction is not allowable, the transaction respective transaction information is rejected.

In case the transaction is allowable, a respective hash value is determined by server 510, and added (e.g. comprised, incorporated, or injected) into the blockchain, e.g. that is, among other entities, comprised by a memory, e.g. database of the server 530.

Then, a state information representing that a certain vehicle comprising the telematics unit 540 should be set into an open state (thus unlocking of its doors) is provided, e.g. by a push method respective REST-API.

This state information is received by the telematics unit 540 so that as a result the vehicle unlocks. The received state information may for instance be checked by the telematics unit 540 prior to the unlocking of the vehicle. For instance, a signature of the respective state information can be checked to ensure that the state information was not e.g. compromised by a fraudulent third party. Further, pay load information comprised by the respective state information may for instance be checked in the same way as well.

In case the state information as a result of the created transaction information was correctly signed, e.g. by the valid parties (e.g. the mobile device 530, the server 510 and the telematics unit 540), the vehicle respectively car opens/unlocks. In case the state information was not correctly signed, the transaction of the initially created transaction information is rejected, so that the vehicle will not unlock.

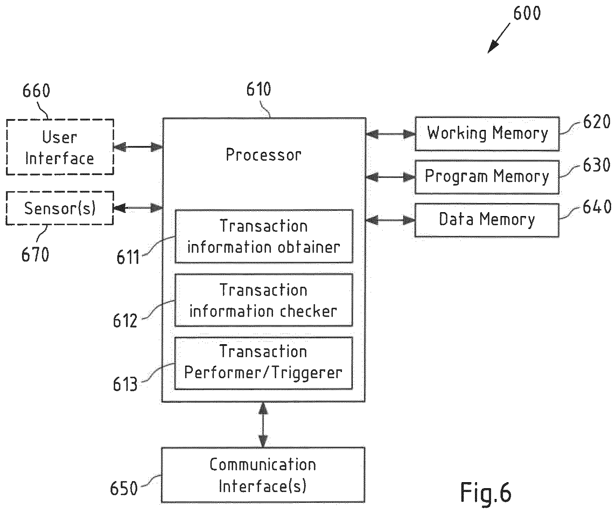

Fig. 6 is a schematic block diagram of an apparatus 600 according to an exemplary aspect of the present invention, which may for instance represent the telematics unit 140 of Fig. 1.

Apparatus 600 comprises a processor 610, working memory 620, program memory 630, data memory 640, communication interface(s) 650, an optional user interface 660 and an optional sensor(s) 670.

Apparatus 600 may for instance be configured to perform and/or control or comprise respective means (at least one of 610 to 670) for performing and/or controlling the method according to the first exemplary aspect of the present invention. Apparatus 600 may as well constitute an apparatus comprising at least one processor (610) and at least one memory (620) including computer program code, the at least one memory and the computer program code configured to, with the at least one processor, cause an apparatus, e.g. apparatus 600 at least to perform and/or control the method according to the first exemplary aspect of the invention of the present invention.

Processor 610 may for instance comprise a transaction information obtainer 611 as a functional and/or structural unit. Transaction information obtainer 611 may for instance be configured to obtain a transaction information (see step 201 of Fig. 2).

Processor 610 may for instance comprise a transaction information checker 612 as a functional and/or structural unit. Transaction information checker 612 may for instance be configured to check a transaction information (see step 202 of Fig. 2).

Processor 610 may for instance comprise a transaction information performer and/or triggerer 613 as a functional and/or structural unit. Transaction information performer and/or triggerer 613 may for instance be configured to perform and/or trigger performing of a transaction (see step 206 of Fig. 2).

Processor 610 may for instance further control the memories 620 to 640, the communication interface(s) 650, the optional user interface 660 and the optional sensor(s) 670.

Processor 610 may for instance execute computer program code stored in program memory 630, which may for instance represent a computer readable storage medium comprising program code that, when executed by processor 610, causes the processor 610 to perform the method according to the first exemplary aspect of the present invention.

Processor 610 (and also any other processor mentioned in this specification) may be a processor of any suitable type. Processor 610 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 610 may for instance be an application processor that runs an operating system.

Program memory 630 may also be included into processor 610. This memory may for instance be fixedly connected to processor 610, or be at least partially removable from processor 610, for instance in the form of a memory card or stick. Program memory 630 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 630 may also comprise an operating system for processor 610. Program memory 630 may also comprise a firmware for apparatus 600.

Apparatus 600 comprises a working memory 620, for instance in the form of a volatile memory. It may for instance be a Random Access Memory (RAM) or Dynamic RAM (DRAM), to give but a few non-limiting examples. It may for instance be used by processor 610 when executing an operating system and/or computer program.

Data memory 640 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 640 may for instance store one or more pieces of transaction information, one or more pieces of location information, one or more pieces of state information, one or more pieces or parts of a blockchain, or alternatively, a blockchain, one or more pieces of credential information, one or more pieces of authentication information, one or more pieces of feedback information, one or more pieces of verifying information, one or more hash values, or a combination thereof, to name but a few non-limiting examples.

Communication interface(s) 650 enable apparatus 600 to communicate with other entities, e.g. with server 110 of Fig. 1. The communication interface(s) 650 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 600 to communicate with other entities, for instance with radio node 130 of Fig. 1.

User interface 660 is optional and may comprise a display for displaying information to a user and/or an input device (e.g. a keyboard, keypad, touchpad, mouse, etc.) for receiving information from a user.

Sensor(s) 670 are optional and may for instance comprise a GNSS-sensor, e.g. to determine a current location of the telematics unit.

Some or all of the components of the apparatus 600 may for instance be connected via a bus. Some or all of the components of the apparatus 600 may for instance be combined into one or more modules.

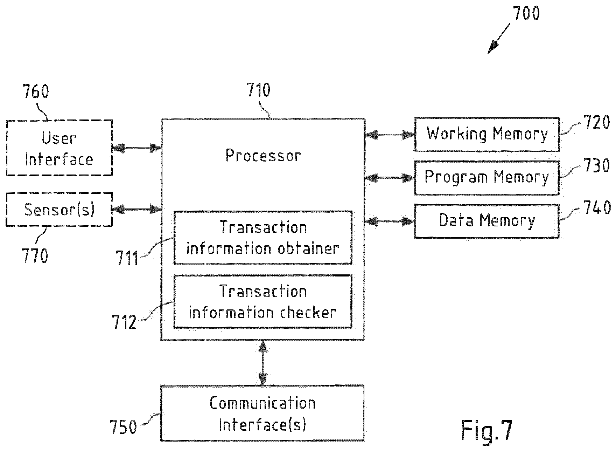

Fig. 7 is a schematic block diagram of an apparatus 700 according to an exemplary aspect of the present invention, which may for instance represent the mobile device 130 of Fig. 1.

Apparatus 700 comprises a processor 710, working memory 720, program memory 730, data memory 740, communication interface(s) 750, an optional user interface 760 and an optional sensor(s) 770.

Apparatus 700 may for instance be configured to perform and/or control or comprise respective means (at least one of 710 to 770) for performing and/or controlling the method according to the second exemplary aspect of the present invention. Apparatus 700 may as well constitute an apparatus comprising at least one processor (710) and at least one memory (720) including computer program code, the at least one memory and the computer program code configured to, with the at least one processor, cause an apparatus, e.g. apparatus 700 at least to perform and/or control the method according to exemplary aspects of the invention of the present invention.

Processor 710 may for instance comprise a transaction information obtainer 711 as a functional and/or structural unit. Transaction information obtainer 711 may for instance be configured to obtain a transaction information (see step 304 of Fig. 3).

Processor 710 may for instance comprise a transaction information checker 712 as a functional and/or structural unit. Transaction information checker 712 may for instance be configured to check a transaction information (see step 305 of Fig. 3).

Processor 710 may for instance comprise a transaction information generator 713 as a functional and/or structural unit. Transaction information generator 713 may for instance be configured to obtain a transaction information (see step 303 of Fig. 3).

Processor 710 may for instance further control the memories 720 to 740, the communication interface(s) 750, the optional user interface 760 and the optional sensor(s) 770.

Processor 710 may for instance execute computer program code stored in program memory 730, which may for instance represent a computer readable storage medium comprising program code that, when executed by processor 710, causes the processor 710 to perform the method according to the second exemplary aspect of the present invention.

Processor 710 (and also any other processor mentioned in this specification) may be a processor of any suitable type. Processor 710 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 710 may for instance be an application processor that runs an operating system.

Program memory 730 may also be included into processor 710. This memory may for instance be fixedly connected to processor 710, or be at least partially removable from processor 710, for instance in the form of a memory card or stick. Program memory 730 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 730 may also comprise an operating system for processor 710. Program memory 730 may also comprise a firmware for apparatus 700.

Apparatus 700 comprises a working memory 720, for instance in the form of a volatile memory. It may for instance be a Random Access Memory (RAM) or Dynamic RAM (DRAM), to give but a few non-limiting examples. It may for instance be used by processor 710 when executing an operating system and/or computer program.

Data memory 740 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 740 may for instance store one or more pieces of transaction information, one or more pieces of location information, one or more pieces of state information, one or more pieces or parts of a blockchain, or alternatively, a blockchain, one or more pieces of credential information, one or more pieces of authentication information, one or more pieces of feedback information, one or more pieces of verifying information, one or more hash values, or a combination thereof, to name but a few non-limiting examples.

Communication interface(s) 750 enable apparatus 700 to communicate with other entities, e.g. with server 110 of Fig. 1. The communication interface(s) 750 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 700 to communicate with other entities, for instance with radio node 130 of Fig. 1.

User interface 760 is optional and may comprise a display for displaying information to a user and/or an input device (e.g. a keyboard, keypad, touchpad, mouse, etc.) for receiving information from a user.

Sensor(s) 770 are optional.

Some or all of the components of the apparatus 700 may for instance be connected via a bus. Some or all of the components of the apparatus 700 may for instance be combined into one or more modules.

Fig. 8 is a schematic block diagram of an apparatus 800 according to an exemplary aspect of the present invention, which may for instance represent the server 110 of Fig. 1.

Apparatus 800 comprises a processor 810, working memory 820, program memory 830, data memory 840, communication interface(s) 850, and an optional user interface 860.

Apparatus 800 may for instance be configured to perform and/or control or comprise respective means (at least one of 810 to 860) for performing and/or controlling the method according to the third exemplary aspect of the present invention. Apparatus 800 may as well constitute an apparatus comprising at least one processor (810) and at least one memory (820) including computer program code, the at least one memory and the computer program code configured to, with the at least one processor, cause an apparatus, e.g. apparatus 800 at least to perform and/or control the method according to exemplary aspects of the invention of the present invention.

Processor 810 may for instance comprise a transaction information obtainer 811 as a functional and/or structural unit. Transaction information obtainer 811 may for instance be configured to obtain a transaction information (see step 401 of Fig. 4).

Processor 810 may for instance comprise a verifying information determiner 812 as a functional and/or structural unit. Verifying information determiner 812 may for instance be configured to determine a verifying information (see step 402 of Fig. 4).

Processor 810 may for instance comprise a hash value determiner 813 as a functional and/or structural unit. Hash value determiner 813 may for instance be configured to determine a hash value (see step 403 of Fig. 4).

Processor 810 may for instance comprise a hash value injector 814 as a functional and/or structural unit. Hash value injector 814 may for instance be configured to comprise a hash value in a blockchain (see step 404 of Fig. 4).

Processor 810 may for instance comprise an optional consensus determiner 815as a functional and/or structural unit. Consensus determiner 815 may for instance be configured to enable apparatus 800 to be a part of a network enabling a consensus model, e.g. determining a respective verifying information that can be checked by other instances of respective one or more apparatus(es) 800.

Processor 810 may for instance comprise an optional smart contract respectively transaction determiner 816 a functional and/or structural unit. Smart contract respectively transaction determiner 816 may for instance be configured to check e.g. a smart contract database based on an obtained transaction information.

Processor 810 may for instance further control the memories 820 to 840, the communication interface(s) 850, and the optional user interface 860.

Processor 810 may for instance execute computer program code stored in program memory 830, which may for instance represent a computer readable storage medium comprising program code that, when executed by processor 810, causes the processor 810 to perform the method according to the third exemplary aspect of the present invention.

Processor 810 (and also any other processor mentioned in this specification) may be a processor of any suitable type. Processor 810 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 810 may for instance be an application processor that runs an operating system.

Program memory 830 may also be included into processor 810. This memory may for instance be fixedly connected to processor 810, or be at least partially removable from processor 810, for instance in the form of a memory card or stick. Program memory 830 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 830 may also comprise an operating system for processor 810. Program memory 830 may also comprise a firmware for apparatus 800.

Apparatus 800 comprises a working memory 820, for instance in the form of a volatile memory. It may for instance be a Random Access Memory (RAM) or Dynamic RAM (DRAM), to give but a few non-limiting examples. It may for instance be used by processor 810 when executing an operating system and/or computer program.

Data memory 840 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 840 may for instance store one or more pieces of transaction information, one or more pieces of location information, one or more pieces of state information, one or more pieces or parts of a blockchain, or alternatively, a blockchain, one or more pieces of credential information, one or more pieces of authentication information, one or more pieces of feedback information, one or more pieces of verifying information, one or more hash values, or a combination thereof, to name but a few non-limiting examples.

Communication interface(s) 850 enable apparatus 800 to communicate with other entities, e.g. with server 110 of Fig. 1. The communication interface(s) 850 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 800 to communicate with other entities, for instance with radio node 130 of Fig. 1.

User interface 860 is optional and may comprise a display for displaying information to a user and/or an input device (e.g. a keyboard, keypad, touchpad, mouse, etc.) for receiving information from a user.

Some or all of the components of the apparatus 800 may for instance be connected via a bus. Some or all of the components of the apparatus 800 may for instance be combined into one or more modules.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

The scope of protection is defined by the claims.

## Claims

1. A method, comprising:
- obtaining (201) a transaction information indicative of a transaction to be performed or triggered to be performed, wherein the transaction information is signed by at least one mobile device and/or an application of the at least one mobile device;
- checking (202) whether or not the transaction information was verified by at least one server at least partially based on a blockchain, wherein the at least one server is enabled to verify the transaction by determining (403) a hash value that is to be comprised by the blockchain in case the transaction is correctly signed and the at least one mobile device and/or the application of the mobile device is allowed to perform or trigger performing of the transaction, wherein the blockchain is accessible by the at least one server and at least one mobile device; and
in case the checking is successful:
- performing (206) or triggering performing of the transaction,
- **characterized in that** the transaction is performed or triggered to be performed only in case a timeslot assigned for the transaction to be performed or triggered to be performed is valid.

2. The method according to claim 1, further comprising:
- obtaining a state information indicative of a state at least one element controllable by at least one telematics unit is set to; and
wherein the transaction is performed or triggered to be performed by setting the at least one element controllable by the at least one telematics unit into the state of the state information.

3. The method according to any of the preceding claims, further comprising:
- obtaining a location information indicative of a position at which the transaction is allowed to be performed;
- checking a current location with the location information, wherein the transaction is performed or triggered to be performed only in case the current location relatively matches a location that is comprised or represented by the location information.

4. The method according to any of the preceding claims, wherein the at least one telematics unit is comprised by a vehicle.

5. The method according to any of the preceding claims, wherein the transaction is performed or triggered to be performed only in case at least one server, at least one mobile device, and the at least one telematics unit have verified the transaction information.

6. The method according to any of the preceding claims, wherein the transaction information is further indicative of an identifier of the at least one telematics unit, wherein the identifier is stored in a secure element comprised by the at least one telematics unit.

7. The method according to any of the preceding claims, wherein the transaction is indicative of an action to be performed and/or triggered to be performed by the at least one telematics unit, in particular an opening or closing action to get access to a vehicle comprising the at least one telematics unit.

8. The method according to any of the preceding claims, wherein the information are transferred in an encrypted form.

9. The method according to any of the preceding claims, wherein the information are transferred by a push-method.

10. A method, comprising:
- generating a transaction information indicative of a transaction to be performed or triggered to be performed, wherein the transaction information is signed by the at least one mobile device and/or an application of the at least one mobile device;
- providing the transaction information to be verified by at least one server;
- checking whether or not the transaction information was verified by the at least one server at least partially based on a blockchain, wherein the at least one server is enabled to verify the transaction by determining a hash value that is to be comprised by the blockchain in case the transaction is correctly signed and the at least one mobile device and/or the application of the mobile device is allowed to perform or trigger performing of the transaction, wherein the blockchain is accessible by the at least one server and at least one telematics unit; and
in case the checking is successful:
- outputting a feedback information indicative of the result of the checking,
- **characterized in that** the transaction is performed or triggered to be performed only in case a timeslot assigned for the transaction to be performed or triggered to be performed is valid.

11. The method according to claim 10, further comprising:
- providing credential information indicative of a user of the at least one mobile device; and
- receiving an authentication information indicative of the user being authenticated or not, and the transaction being allowed or not.

12. The method according to claim 10 or claim 11, wherein the transaction is indicative of an action to be performed and/or triggered to be performed by the at least one telematics unit, in particular an opening or closing action to get access to a vehicle comprising the at least one telematics unit.

13. The method according to any of the claims 10 to 12, wherein the transaction information is further indicative of an identifier of the at least one telematics unit, wherein the identifier is stored in a secure element comprised by the at least one telematics unit.

14. The method according to any of the claims 10 to 13, wherein the information are transferred in an encrypted form.

15. The method according to any of the preceding claims 10 to 14, wherein the information are transferred by a push-method.

16. A method, comprising:
- obtaining a transaction information indicative of a transaction to be performed or triggered to be performed, wherein the transaction information is signed by at least one mobile device and/or an application of the at least one mobile device;
- determining a verifying information at least partially based on the transaction information, wherein it is checked whether or not the transaction is correctly signed and the at least one mobile device and/or the application of the mobile device is allowed to perform or trigger performing of the transaction, wherein in case the checking is successful:
- determining a hash value indicative of the transaction being correctly signed and verified at least partially based on the transaction information and the verifying information; and
- comprising the determined hash value in a blockchain that is accessible by at least one mobile device and at least one telematics unit,
- **characterized in that** the transaction is performed or triggered to be performed only in case a timeslot assigned for the transaction to be performed or triggered to be performed is valid.

17. The method according to claim 16, further comprising:
- providing a state information indicative of a state at least one element controllable by the at least one telematics unit is set to.

18. The method according to claim 16 claim or claim17, wherein the blockchain is stored in a decentralized way, in particular by more than one server configured to perform and/or control said method.

19. The method according to any of the claims 16 to 18, wherein the transaction information is further indicative of an identifier of the at least one telematics unit, wherein the identifier is stored in a secure element comprised by the at least one telematics unit.

20. The method according to any of the claims 16 to 19, wherein the information are transferred in an encrypted form.

21. The method according to any of the claims 16 to 20, wherein the information are transferred by a push-method.

22. A telematics unit configured to perform and/or control or comprising respective means for performing and/or controlling the method of any of the claims 1 to 9.

23. A mobile device configured to perform and/or control or comprising respective means for performing and/or controlling the method of any of the claims 10 to 15.

24. A server configured to perform and/or control or comprising respective means for performing and/or controlling the method of any of the claims 16 to 21.

25. A system, comprising:
- at least one telematics according to claim 22;
at least one mobile device according to claim 23; and
- at least one server according to claim 24.

## Patentansprüche

1. Verfahren, umfassend:
- Erhalten (201) einer Transaktionsinformation indikativ für eine durchzuführende oder zum Durchführen getriggerte Transaktion, wobei die Transaktionsinformation von mindestens einem mobilen Gerät und/oder einer Anwendung des mindestens einen mobilen Geräts signiert ist;
- Prüfen (202), ob die Transaktionsinformation von mindestens einem Server zumindest teilweise auf der Grundlage einer Blockchain verifiziert wurde oder nicht, wobei der mindestens eine Server in der Lage ist, die Transaktion zu verifizieren mittels eines Bestimmens (403) eines Hash-Wertes, der von der Blockchain umfasst sein sollte, falls die Transaktion korrekt signiert ist und das mindestens eine mobile Gerät und/oder die Anwendung des mobilen Geräts die Durchführung der Transaktion durchführen oder die Durchführung triggern darf, wobei die Blockchain für den mindestens einen Server und das mindestens eine mobile Gerät zugänglich ist; und
für den Fall, dass das Prüfen erfolgreich ist:
- Durchführen (206) oder Triggern eines Durchführens der Transaktion,
- **dadurch gekennzeichnet, dass**
die Transaktion nur dann durchgeführt oder zum Durchführen getriggert wird, wenn ein für die durchzuführende oder zum Durchführen getriggerte Transaktion zugewiesener Zeitschlitz gültig ist.

2. Verfahren nach Anspruch 1, ferner umfassend:
- Erhalten einer Zustandsinformation indikativ für einen Zustand, in dem sich mindestens ein von mindestens einer Telematikeinheit steuerbares Element befindet; und
wobei die Transaktion dadurch durchgeführt oder zum Durchführen getriggert wird, dass das mindestens eine Element, das durch die mindestens eine Telematikeinheit steuerbar ist, in den Zustand der Zustandsinformation versetzt wird.

3. Verfahren nach einem der vorangegangenen Ansprüche, ferner umfassend:
- Erhalten einer Standortinformation indikativ für eine Position, an der die Transaktion durchgeführt werden darf;
- Prüfen eines aktuellen Standorts mit der Standortinformation, wobei die Transaktion nur dann durchgeführt oder ihr Durchführen getriggert wird, wenn der aktuelle Standort relativ mit einem Standort übereinstimmt, der von der Standortinformation umfasst oder repräsentiert wird.

4. Verfahren nach einem der vorhergehenden Ansprüche, wobei die mindestens eine Telematikeinheit von einem Fahrzeug umfasst ist.

5. Verfahren nach einem der vorhergehenden Ansprüche, wobei die Transaktion nur dann durchgeführt oder zum Durchführen getriggert wird, wenn mindestens ein Server, mindestens ein mobiles Gerät und die mindestens eine Telematikeinheit die Transaktionsinformation überprüft haben.

6. Verfahren nach einem der vorhergehenden Ansprüche, wobei die Transaktionsinformation ferner indikativ für eine Kennung der mindestens einen Telematikeinheit ist, wobei die Kennung in einem sicheren Element gespeichert ist, das die mindestens eine Telematikeinheit umfasst.

7. Verfahren nach einem der vorangehenden Ansprüche, wobei die Transaktion indikativ für eine von der mindestens einen Telematikeinheit durchzuführende und/oder zum Durchführen triggerende Aktion ist, insbesondere eine Öffnungs- oder Schließaktion, um Zugang zu einem Fahrzeug zu erhalten, das die mindestens eine Telematikeinheit umfasst.

8. Verfahren nach einem der vorhergehenden Ansprüche, wobei die Informationen in verschlüsselter Form übertragen werden.

9. Verfahren nach einem der vorhergehenden Ansprüche, wobei die Informationen durch eine Push-Methode übertragen werden.

10. Verfahren, umfassend:
- Erzeugen einer Transaktionsinformation indikativ für eine durchzuführende oder zum Durchführen getriggerte Transaktion, wobei die Transaktionsinformation von mindestens einem mobilen Gerät und/oder einer Anwendung des mindestens einen mobilen Geräts signiert ist;
- Bereitstellen der Transaktionsinformation zum Verifizieren durch mindestens einem Server;
- Prüfen, ob die Transaktionsinformation von dem mindestens einen Server zumindest teilweise auf der Grundlage einer Blockchain verifiziert wurde oder nicht, wobei der mindestens eine Server in der Lage ist, die Transaktion zu verifizieren mittels eines Bestimmens eines Hash-Wertes, der von der Blockchain umfasst sein sollte, falls die Transaktion korrekt signiert ist und das mindestens eine mobile Gerät und/oder die Anwendung des mobilen Geräts die Durchführung der Transaktion durchführen oder die Durchführung triggern darf, wobei die Blockchain für den mindestens einen Server und das mindestens eine mobile Gerät zugänglich ist; und
für den Fall, dass das Prüfen erfolgreich ist:
- Ausgeben einer Rückmeldungsinformation indikative für das Ergebnis des Prüfens,
- **dadurch gekennzeichnet, dass**
die Transaktion nur dann durchgeführt oder zum Durchführen getriggert wird, wenn ein für die durchzuführende oder zum Durchführen getriggerte Transaktion zugewiesener Zeitschlitz gültig ist.

11. Verfahren nach Anspruch 10, ferner umfassend:
- Bereitstellen einer Berechtigungsinformation indikativ für einen Benutzer des mindestens einen mobilen Geräts; und
- Empfangen einer Authentifizierungsinformation indikativ dafür, ob der Benutzer authentifiziert ist oder nicht, und indikativ dafür, ob die Transaktion erlaubt ist oder nicht.

12. Verfahren nach Anspruch 10 oder Anspruch 11, wobei die Transaktion indikativ für eine von mindestens einer Telematikeinheit durchzuführende und/oder zum Durchführen triggerende Aktion ist, insbesondere eine Öffnungs- oder Schließaktion, um Zugang zu einem Fahrzeug zu erhalten, das die mindestens eine Telematikeinheit umfasst.

13. Verfahren nach einem der Ansprüche 10 bis 12, wobei die Transaktionsinformation ferner indikativ für eine Kennung der mindestens einen Telematikeinheit ist, wobei die Kennung in einem sicheren Element gespeichert ist, das die mindestens eine Telematikeinheit umfasst.

14. Verfahren nach einem der Ansprüche 10 bis 13, wobei die Informationen in verschlüsselter Form übertragen werden.

15. Verfahren nach einem der vorhergehenden Ansprüche 10 bis 14, wobei wobei die Informationen durch eine Push-Methode übertragen werden.

16. Verfahren, umfassend:
- Erhalten einer Transaktionsinformation indikativ für eine durchzuführende oder zum Durchführen getriggerte Transaktion, wobei die Transaktionsinformation von mindestens einem mobilen Gerät und/oder einer Anwendung des mindestens einen mobilen Geräts signiert ist;
- Bestimmen einer Verifizierungsinformation zumindest teilweise basierend auf der Transaktionsinformation, wobei geprüft wird, ob die Transaktion korrekt signiert ist oder nicht und es dem mindestens einen mobilen Gerät und/oder der Anwendung des mobilen Geräts erlaubt ist, die Transaktion durchzuführen oder deren Durchführen zu triggern, wobei im Falle eines erfolgreichen Prüfens: Bestimmen eines Hash-Wertes indikativ dafür, dass die Transaktion korrekt signiert und verifiziert ist zumindest teilweise basierend auf der Transaktionsinformation und der Verifizierungsinformation; und
- Umfassen des Hash-Wertes in einer Blockchain, auf die mindestens ein mobiles Gerät und mindestens eine Telematikeinheit zugreifen können,
- **dadurch gekennzeichnet, dass**
die Transaktion nur dann durchgeführt oder zum Durchführen getriggert wird, wenn ein für die durchzuführende oder zum Durchführen getriggerte Transaktion zugewiesener Zeitschlitz gültig ist.

17. Verfahren nach Anspruch 16, ferner umfassend:
- Bereitstellen einer Zustandsinformation indikativ für einen Zustand, in dem sich mindestens ein von mindestens einer Telematikeinheit steuerbares Element befindet.

18. Verfahren nach Anspruch 16 oder Anspruch 17, wobei die Blockchain dezentral gespeichert ist, insbesondere von mehr als einem Server, der zur Durchführung und/oder Steuerung des Verfahrens konfiguriert ist.

19. Verfahren nach einem der Ansprüche 16 bis 18, wobei die Transaktionsinformation ferner indikativ für eine Kennung der mindestens einen Telematikeinheit ist, wobei die Kennung in einem sicheren Element gespeichert ist, das die mindestens eine Telematikeinheit umfasst.

20. Verfahren nach einem der Ansprüche 16 bis 19, wobei die Informationen in verschlüsselter Form übertragen werden.

21. Verfahren nach einem der Ansprüche 16 bis 20, wobei die Informationen durch eine Push-Methode übertragen werden.

22. Telematikeinheit, die so konfiguriert ist, dass sie das Verfahren nach einem der Ansprüche 1 bis 9 durchführt und/oder steuert, oder die entsprechende Mittel zur Durchführung und/oder Steuerung des Verfahrens umfasst.

23. Mobiles Gerät, das so konfiguriert ist, dass es das Verfahren nach einem der Ansprüche 10 bis 15 durchführt und/oder steuert oder entsprechende Mittel zur Durchführung und/oder Steuerung des Verfahrens umfasst.

24. Server, der so konfiguriert ist, dass er das Verfahren nach einem der Ansprüche 16 bis 21 durchführt und/oder steuert, oder der entsprechende Mittel zur Durchführung und/oder Steuerung des Verfahrens umfasst.

25. System, umfassend:
- mindestens eine Telematikeinheit nach Anspruch 22;
- mindestens ein mobiles Gerät nach Anspruch 23; und
- mindestens einen Server nach Anspruch 24.

## Revendications

1. Un procédé, comprenant :
- l'obtention (201) d'une information de transaction indicative d'une transaction à effectuer ou à déclencher pour être effectuée, l'information de transaction étant signée par au moins un dispositif mobile et/ou une application de l'au moins un dispositif mobile ;
- la vérification (202) si oui ou non l'information de transaction a été vérifiée par au moins un serveur au moins partiellement sur la base d'une blockchain, l'au moins un serveur pouvant vérifier la transaction en déterminant (403) une valeur de hachage qui doit être comprise par la blockchain dans le cas où la transaction est correctement signée et l'au moins un dispositif mobile et/ou l'application du dispositif mobile est autorisé à effectuer ou à déclencher l'effectuation de la transaction, la blockchain étant accessible par l'au moins un serveur et l'au moins un dispositif mobile ; et
en cas de succès de la vérification :
- l'effectuation (206) ou le déclenchement de l'effectuation de la transaction,
- **caractérisé en ce que**
la transaction est effectuée ou déclenchée pour être effectuée seulement dans le cas où un créneau temporel assigné à la transaction à effectuer ou à déclencher pour être effectuée est valide.

2. Le procédé selon la revendication 1, comprenant en outre :
- l'obtention d'une information d'état indicative d'un état dans lequel au moins un élément contrôlable par au moins une unité télématique est mis ; et
la transaction étant effectuée ou déclenchée pour être effectuée en mettant l'au moins un élément contrôlable par l'au moins une unité télématique dans l'état de l'information d'état.

3. Le procédé selon l'une quelconque des revendications précédentes, comprenant en outre :
- l'obtention d'une information d'emplacement indicative d'une position à laquelle la transaction est autorisée à être effectuée ;
- la vérification d'un emplacement actuel avec l'information d'emplacement, la transaction étant effectuée ou déclenchée pour être effectuée seulement dans le cas où l'emplacement actuel correspond à un emplacement qui est compris ou représenté par l'information d'emplacement.

4. Le procédé selon l'une quelconque des revendications précédentes, l'au moins une unité télématique étant comprise dans un véhicule.

5. Le procédé selon l'une quelconque des revendications précédentes, la transaction étant effectuée ou déclenchée pour être effectuée seulement dans le cas où au moins un serveur, au moins un dispositif mobile, et l'au moins une unité télématique ont vérifié l'information de transaction.

6. Le procédé selon l'une quelconque des revendications précédentes, l'information de transaction étant en outre indicative d'un identifiant de l'au moins une unité télématique, l'identifiant étant stocké dans un élément sécurisé compris dans l'au moins une unité télématique.

7. Le procédé selon l'une quelconque des revendications précédentes, la transaction étant indicative d'une action à effectuer et/ou à déclencher pour être effectuée par l'au moins une unité télématique, en particulier une action d'ouverture ou de fermeture pour obtenir l'accès à un véhicule comprenant l'au moins une unité télématique.

8. Le procédé selon l'une quelconque des revendications précédentes, les informations étant transférées sous une forme cryptée.

9. Le procédé selon l'une quelconque des revendications précédentes, les informations étant transférées par une méthode "push".

10. Un procédé, comprenant :
- la génération d'une information de transaction indicative d'une transaction à effectuer ou à déclencher pour être effectuée, l'information de transaction étant signée par l'au moins un dispositif mobile et/ou une application de l'au moins un dispositif mobile ;
- la fournissage de l'information de transaction à vérifier par au moins un serveur ;
- la vérification si oui ou non l'information de transaction a été vérifiée par l'au moins un serveur au moins partiellement sur la base d'une blockchain, l'au moins un serveur pouvant vérifier la transaction en déterminant une valeur de hachage qui doit être comprise par la blockchain dans le cas où la transaction est correctement signée et l'au moins un dispositif mobile et/ou l'application du dispositif mobile est autorisé à effectuer ou à déclencher l'effectuation de la transaction, la blockchain étant accessible par l'au moins un serveur et au moins une unité télématique ; et
en cas de succès de la vérification :
- la sortie d'une information de retour indicative du résultat de la vérification,
- **caractérisé en ce que**
la transaction est effectuée ou déclenchée pour être effectuée seulement dans le cas où un créneau temporel assigné à la transaction à effectuer ou à déclencher pour être effectuée est valide.

11. Le procédé selon la revendication 10, comprenant en outre :
- la fournissage d'un information d'accréditation indicative d'un utilisateur de l'au moins un dispositif mobile ; et
- la réception d'une information d'authentification indicative de l'utilisateur étant authentifié ou non, et la transaction étant autorisée ou non.

12. Le procédé selon la revendication 10 ou la revendication 11, la transaction étant indicative d'une action à effectuer et/ou à déclencher pour être effectuée par l'au moins une unité télématique, en particulier une action d'ouverture ou de fermeture pour obtenir l'accès à un véhicule comprenant l'au moins une unité télématique.

13. Le procédé selon l'une quelconque des revendications 10 à 12, l'information de transaction étant en outre indicative d'un identifiant de l'au moins une unité télématique, l'identifiant étant stocké dans un élément sécurisé compris dans l'au moins une unité télématique.

14. Le procédé selon l'une quelconque des revendications 10 à 13, les informations étant transférées sous une forme cryptée.

15. Le procédé selon l'une quelconque des revendications 10 à 14, les informations étant transférées par une méthode "push".

16. Un procédé, comprenant :
- l'obtention d'une information de transaction indicative d'une transaction à effectuer ou à déclencher pour être effectuée, l'information de transaction étant signée par au moins un dispositif mobile et/ou une application de l'au moins un dispositif mobile ;
- la détermination d'une information de vérification au moins partiellement sur la base de l'information de transaction, dans laquelle il est vérifié si oui ou non la transaction est correctement signée et l'au moins un dispositif mobile et/ou l'application du dispositif mobile est autorisé à effectuer ou à déclencher l'effectuation de la transaction, dans lequel en cas de succès de la vérification :
- la détermination d'une valeur de hachage indicative de la transaction ayant été correctement signée et vérifiée au moins partiellement sur la base de l'information de transaction et l'information de vérification ; et
- l'inclusion de la valeur de hachage déterminée dans une blockchain qui est accessible par au moins un dispositif mobile et au moins une unité télématique,
- **caractérisé en ce que**
la transaction est effectuée ou déclenchée pour être effectuée seulement dans le cas où un créneau temporel assigné à la transaction à effectuer ou à déclencher pour être effectuée est valide.

17. Le procédé selon la revendication 16, comprenant en outre :
- la fournissage d'une information d'état indicative d'un état dans lequel au moins un élément contrôlable par l'au moins une unité télématique est mis.

18. Le procédé selon la revendication 16 ou la revendication 17, la blockchain étant stockée de manière décentralisée, en particulier par plus d'un serveur configuré pour effectuer et/ou contrôler ledit procédé.

19. Le procédé selon l'une quelconque des revendications 16 à 18, l'information de transaction étant en outre indicative d'un identifiant de l'au moins une unité télématique, l'identifiant étant stocké dans un élément sécurisé compris dans l'au moins une unité télématique.

20. Le procédé selon l'une quelconque des revendications 16 à 19, les informations étant transférées sous une forme cryptée.

21. Le procédé selon l'une quelconque des revendications 16 à 20, les informations étant transférées par une méthode "push".

22. Une unité télématique configurée pour effectuer et/ou contrôler ou comprenant des moyens respectifs pour effectuer et/ou contrôler le procédé selon l'une quelconque des revendications 1 à 9.

23. Un dispositif mobile configuré pour effectuer et/ou contrôler ou comprenant des moyens respectifs pour effectuer et/ou contrôler le procédé selon l'une quelconque des revendications 10 à 15.

24. Un serveur configuré pour effectuer et/ou contrôler ou comprenant des moyens respectifs pour effectuer et/ou contrôler le procédé selon l'une quelconque des revendications 16 à 21.

25. Un système, comprenant :
- au moins une télématique selon la revendication 22 ;
au moins un dispositif mobile selon la revendication 23 ; et
- au moins un serveur selon la revendication 24.
